# EUROPÄISCHE PATENTSCHRIFT

(11) **EP 1 522 376 B1**
(45) Veröffentlichungstag und Bekanntmachung des Hinweises auf die Patenterteilung: **07.06.2006**
(21) Anmeldenummer: 04002831.8
(22) Anmeldetag: 09.02.2004
(51) Int. Cl.: B23Q 1/00, B23Q 1/01

(54) **Säulenbohrmaschine**
Column drilling machine
Perçeuse sur colonne

(30) Priorität: 08.10.2003 DE 20315446 U
(43) Veröffentlichungstag der Anmeldung: 13.04.2005
(73) Patentinhaber: Rotwerk Elektrowerkzeuge und Handelsmarketing Beteiligungsgesellschaft mbH, 85609 Aschheim (DE)
(72) Erfinder: Dallinger, Peter, 85609 Aschheim (DE); Frey, Dieter, 73540 Heubach (DE)
(74) Vertreter: Grünecker, Kinkeldey, Stockmair & Schwanhäusser Anwaltssozietät

(56) Entgegenhaltungen:
- DE-C- 976 137
- GB-A- 191 503 997
- US-A- 1 658 808
- US-A- 1 706 824
- US-A- 1 825 181
- US-A- 1 992 311

## Beschreibung

Die vorliegende Erfindung betrifft eine Säulenbohrmaschine, bei der ein Bohrkopf an einer Säule gelagert ist und die Säule wiederum an einem Fuß befestigt ist.

Es sind Säulenbohrmaschinen bekannt, bei denen ein Stromversorgungsstrang aus einem Bohrkopf herausgeführt ist. Steht eine derartige Säulenbohrmaschine beispielsweise in einer Ecke, ist der von dem Bohrkopf herunterhängende Stromversorgungsstrang nicht weiter störend. Wenn die Säulenbohrmaschine jedoch freistehend aufgestellt ist, kann der herunterhängende Stromversorgungsstrang eine Unfallquelle sowie eine Behinderung darstellen und ist zudem der Gefahr ausgesetzt, beschädigt zu werden. Von außen an einer Säule befestigte Stromversorgungsstränge stellen weniger eine Unfallgefahr dar, jedoch sind sie weiterhin Beschädigungen ausgesetzt. Aus der AT 81119 ist eine Tischbohrmaschine bekannt, bei der im Bereich eines gekröpften Tragarms ein Stromversorgungsstrang herangeführt ist.

Säulenbohrmaschinen mit im Inneren der Säule verlaufendem Stromversorgungsstrang sind aus der US 1,825,181, der US 1,992,311, der DE 976 137 C und der US 1,706,824 bekannt.

Aus der US 1,658,808 und der GB 003 997 sind Säulenbohrmaschinen mit den Merkmalen des Oberbegriffes des Anspruches 1 bekannt.

Der vorliegenden Erfindung liegt die Aufgabe zugrunde, eine Säulenbohrmaschine dahingehend zu verbessern, dass bei guter Funktionalität und Handhabbarkeit ein Stromversorgungsstrang möglichst in geschützter Weise gefährdungs- und behinderungsarm einem Bohrkopf zugeführt wird.

Die Aufgabe wird erfindungsgemäß gelöst mit einer Säulenbohrmaschine mit den Merkmalen des Anspruchs 1.

Mit dem etwa längs geführten Stromversorgungsstranges im Inneren der Säule ist der Stromversorgungsstrang gleichzeitig beschädigungsgeschützt sowie gefährdungs- und unfallarm angeordnet. Der von der Säule eingenommene Raum wird zum Unterbringen des Stromversorgungsstranges genutzt. Die Säule selbst dient im Bereich des Aufnahmeraumes als Gefährdungs-, Behinderungs- und Beschädigungsschutz.

Mit der im Bereich des Fußes und der Säule und/oder im Bereich von Säule und Bohrkopf vorgesehenen zusammenfügbaren Trennstelle des Stromversorgungsstranges wird ein Trennen und Verbinden des Stromversorgungsstranges in diesem Bereich ermöglicht. Dies erleichtert ein Montieren und Demontieren der betreffenden Komponenten.

Da die Trennstelle als lösbare Steckverbindung ausgebildet ist, ist der Stromversorgungsstrang einfach und wiederholbar verbindbar und trennbar, was das Montieren und Demontieren vereinfacht.

Bevorzugt kann der Stromversorgungsstrang vom Fuß bis zum Bohrkopf im Inneren der Säulenbohrmaschine verlaufen. Hierdurch ist der Stromversorgungsstrang im gesamten Bereich der Säulenbohrmaschine geschützt und platzsparend angeordnet.

Günstigerweise kann die Steckverbindung wenigstens bereichsweise im Inneren der Säule vorgesehen sein. Dementsprechend ist die Steckverbindung geschützt und raumsparend in der Säulenbohrmaschine angeordnet.

Besonders vorteilhaft kann die Steckverbindung wenigstens einen Stecker aufweisen, welcher durch eine Zugentlastung gegenüber der Säule und/oder dem Fuß und/oder dem Bohrkopf gegen ein Bewegen entgegen der Löserichtung der Steckverbindung gehemmt ist. Damit wird der Stecker beim Lösen der Steckverbindung im Wesentlichen in seiner Position relativ zu der oder den betreffenden Komponenten gehalten, wodurch ein an dem Stecker angebrachter Teil des Stromversorgungsstranges beim Lösen der Steckverbindung zugentlastet ist.

Besonders bevorzugt kann die Zugentlastung eines ersten Steckers gegenüber der Säule ein an dem ersten Stecker und/oder oder der Säule vorgesehenes Klemmprofil sein. Mit dem Klemmprofil wird beim Lösen der Steckverbindung ein Rutschen des ersten Steckers relativ zu der Säule gehemmt. Dadurch ist der mit dem ersten Stecker verbundene Teil des Stromversorgungsstranges beim Lösen der Steckverbindung zugentlastet.

Besonders günstig kann die Zugentlastung eines zweiten Steckers gegenüber dem Fuß oder dem Bohrkopf ein separates Flanschteil sein, welches den zweiten Stecker entgegen der Löserichtung der Steckverbindung an dem Fuß oder dem Bohrkopf hält. Hierdurch ist der mit dem zweiten Teil verbundene Teil des Stromversorgungsstranges beim Lösen der Steckverbindung zugentlastet.

In einer weiteren Ausführungsform der Erfindung kann die Steckverbindung wenigstens einen Stecker aufweisen, der wenigstens eine Richtnase hat, mit welcher er an der Säule oder dem Fuß oder dem Bohrkopf ausgerichtet angebracht ist. Dadurch ist der Stecker in einer vorbestimmten Lage zu der betreffenden Komponente formschlüssig gehalten.

Besonders bevorzugt kann die Steckverbindung wenigstens einen Stecker aufweisen, welcher ein Befestigungsmodul und ein dazu separates elektrisches Steckverbindungsmodul hat, welches an dem Befestigungsmodul lösbar anbringbar ist. Auf diese Weise sind die Befestigungsfunktion und die elektrische Steckverbindungsfunktion des Steckers getrennt und die Module sind jeweils austauschbar. Femer kann das Befestigungsmodul in seine Bestimmungsposition an der Säulenbohrmaschine gebracht werden, bevor das Steckverbindungsmodul an ihm befestigt wird.

Vorteilhafterweise kann im Bereich des Fußes eine Vorratsaufnahme für den Stromversorgungsstrang vorgesehen sein. Mit dieser kann wenigstens ein Teil einer nicht genutzten Länge des von der Säulenbohrmaschine wegführenden Stromversorgungsstranges gelagert werden.

Günstigerweise kann die Vorratsaufnahme kabelspinnenartig oder kabeltrommelartig ausgebildet sein. Hiermit kann wenigstens ein Teil eines aus der Säulenbohrmaschine austretenden Abschnittes des Stromversorgungsstranges aufgewickelt werden.

In einer weiteren Ausführungsform der Erfindung kann an dem Fuß wenigstens eine Aussparung vorgesehen sein, durch welche der Stromversorgungsstrang aus dem Bereich des Fußes herausgeführt ist. Mittels der Aussparung ist der Stromversorgungsstrang aus dem Bereich des Fußes beschädigungsgeschützt und an einer definierten Stelle herausgeführt.

Bevorzugt kann die Aussparung ein in sie einsetzbares Halteelement mit wenigstens einem Halteprofil aufweisen, mit welchem der Stromversorgungsstrang in einer vorbebestimmten Position relativ zu dem Halteelement fixierbar ist. Auf diese Weise wird der Stromversorgungsstrang in einer gewünschten Position bezüglich der Aussparung an dem Fuß 4 gehalten, wenn der Stromversorgungsstrang in dem Halteelement fixiert ist und dieses in die Aussparung eingesetzt ist.

Bevorzugterweise kann ein Flanschteil vorgesehen sein, mit welchem die Säule zentriert an dem Fuß gelagert ist. Mit dem Flanschteil werden Bezugsflächen der Säule und des Fußes in einer vorbestimmten Lage zueinander gehalten.

In einer vorteilhaften Ausführungsform der Erfindung kann eine Steckverbindung wenigstens bereichsweise im Inneren des Flanschteiles angeordnet sein. Dadurch befindet sich die Steckverbindung in dem Bereich, in dem die Säule und der Fuß voneinander trennbar und miteinander verbindbar sind. Ein Trennen und Verbinden des Stromversorgungsstranges erfolgt gleichzeitig mit dem Trennen und Verbinden von Säulen und Fuß.

Besonders günstig können die Säule und das Flanschteil wenigstens je eine Bohrung aufweisen, durch die sich wenigstens abschnittsweise ein und dasselbe Fixiermittel erstreckt Hiermit sind die Säule und das Flanschteil in einervorbestimmten Lage zueinander sicherbar.

Bei einer weiteren Ausführungsform der Erfindung kann der Bohrkopf gegenüber der Säule verschwenkbar sein und es kann eine Schwenkbegrenzungseinrichtung vorgesehen sein. Diese verhindert ein Überdrehen des Bohrkopfes gegenüber der Säule. Ein sich zwischen Säule und Bohrkopf erstreckender Stromversorgungsstrang wird hierdurch vor einer Überbeanspruchung geschützt.

Besonders günstig kann an der Säule oder an dem Bohrkopf eine Ausnehmung vorgesehen sein und an dem Bohrkopf oder der Säule ein in der Ausnehmung führbares Profil vorgesehen sein, wobei die Schwenkbewegung durch Anlage des Profils an Endabschnitten der Ausnehmung begrenzt ist. Auf diese Weise ist die Schwenkbegrenzung durch die Abmessungen der Ausnehmung bzw. des in der Ausnehmung führbaren Profils definiert.

vorzugsweise kann die Ausnehmung als quer zur Längsrichtung der Säule verlaufende Nut ausgebildet sein. Die Nut begrenzt die relative Bewegbarkeit von Säule und Bohrkopf in Längsrichtung der Säule. Auf diese Weise ist gleichzeitig der Bohrkopf an der Säule gegen ein unbeabsichtigtes Abnehmen gesichert.

Bevorzugterweise kann zwischen Säule und Bohrkopf ein lösbarer Klemmer gelagert sein, mit welchem ein Schwenken des Bohrkopfes gegenüber der Säule hemmbar ist. Mit dem Klemmer sind bestimmte Relativpositionen von Säule und Bohrkopf fixierbar.

Günstigerweise kann der Klemmer zwei in ihrem Abstand zueinander einstellbare Klemmelemente aufweisen, welche jeweils klemmend mit der Säule in Anlage bringbar sind, wobei der Klemmer radial zu dem Bohrkopf abgestützt ist. Durch das Verändern des Abstandes der Klemmelemente ist eine zwischen den Klemmelementen und der Säule jeweils erzeugte Reibungskraft einstellbar. Dabei wird das Aufbringen der Reibungskraft dadurch gewährleistet, dass der Klemmer seine Lager radial bezüglich der Säule im Wesentlichen beibehält.

Besonders vorteilhaft kann der Klemmer einen Schraubmechanismus aufweisen, mit welchem der Abstand der Klemmelemente zueinander einstellbar ist. Der Schraubmechanismus stellt dabei ein Übersetzungsgetriebe dar, mit welchem der Abstand der Klemmelemente fein einstellbar ist und mit einer geringen Bedienkraft eine große, ein Schwenken des Bohrkopfes relativ zu der Säule hemmende Klemmkraft erzeugbar ist.

Vorteilhafterweise kann wenigstens eines der Klemmelemente eine zu der Form der Säule korrespondierende Anlagefläche aufweisen. Mit dieser ist ein für die Säule geeignetes Andrücken des Klemmelementes an die Säule möglich.

Günstigerweise kann der Klemmer in einem Hohlraum des Bohrkopfes aufgenommen sein, welcher von einem Stutzen geschnitten ist, in welchem die Säule bereichsweise aufgenommen ist. Im Bereich des Anschnitts ist der Klemmer in Anlage mit der Säule und kann an ihr haltend angreifen.

Ausführungsformen der vorliegenden Erfindung sind in der Zeichnung dargestellt. Es zeigen:
- Figur 1: eine perspektivische explodierte Ansicht eines ersten Steckers einer Steckverbindung und eines Bereichs einer Säule ersten Ausführungsform einer erfindungsgemäßen Säulenbohrmaschine,
- Figur 2: eine perspektivische Ansicht auf den ersten Stecker der Steckverbindung,
- Figur 3: eine perspektivische Ansicht eines Fußes der Säulenbohrmaschine,
- Figur 4: eine perspektivische Ansicht eines zweiten Steckers der Steckverbindung der Säulenbohrmaschine,
- Figur 5: eine weitere perspektivische Ansicht des zweiten Steckers,
- Figur 6: eine bereichsweise, perspektivische teilexplodierte Ansicht eines Verbindungsbereiches zwischen der Säule und dem Fuß der Säulenbohrmaschine,
- Figur 7: eine bereichsweise perspektivische Ansicht der Säule und des Fußes in montiertem Zustand,
- Figur 8: eine perspektivische explodierte Ansicht auf einen Bohrkopf, einen Klemmer, eine Schwenkwinkelbegrenzungsvorrichtung und einen Bereich der Säule der Säulenbohrmaschine,
- Figur 9: eine perspektivische Ansicht auf die in Figur 8 gezeigten Komponenten in montiertem Zustand,
- Figur 10: eine schematische, teilweise geschnittene Darstellung der Säulenbohrmaschine,
- Figur 11: eine alternative Ausführungsform eines ersten Steckers der erfindungsgemäßen Säulenbohrmaschine und
- Figur 12: eine alternative Ausführungsform einer Aussparung des Fußes der erfindungsgemäßen Säulenbohrmaschine.

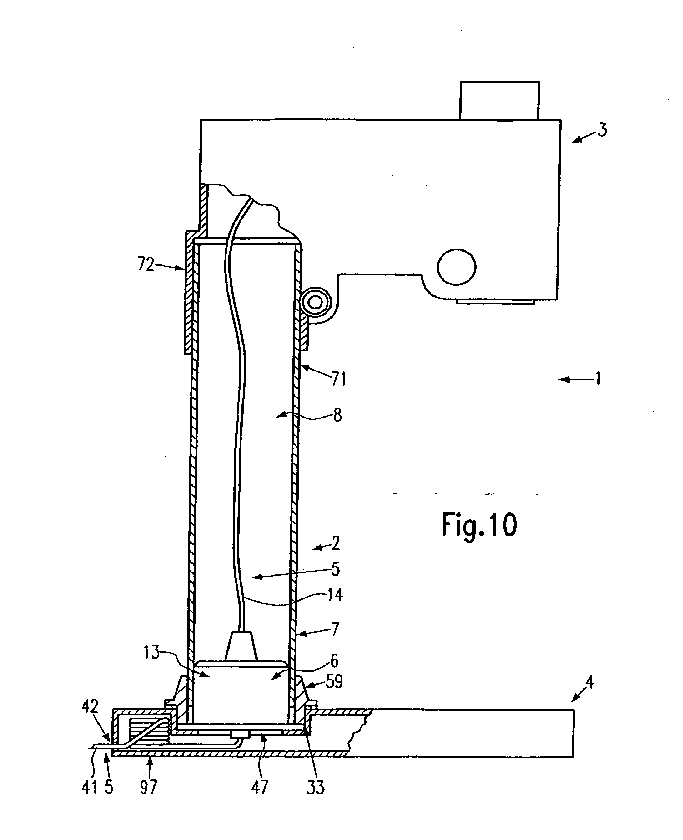

Eine erfindungsgemäße Säulenbohrmaschine 1 weist einen an einer Säule 2 gelagerten Bohrkopf 3 und einen Fuß 4 auf, an welchem die Säule 2 befestigt ist. Die Säule 2 weist einen sich etwa längs in ihrem Inneren erstreckenden Aufnahmeraum 8 auf. Ein Stromversorgungsstrang 5 der Säulenbohrmaschine 1 verläuft über die gesamte Länge der Säule 2 etwa längs in diesem Aufnahmeraum 8. In dieser Ausführungsform der Erfindung verläuft der Stromversorgungsstrang in den Fuß 4 eintretend im Inneren der Säule 2 bis zum Bohrkopf 3, vgl. Figur 10.

Der Stromversorgungsstrang 5 weist eine zusammenfügbare Trennstelle auf, die als eine lösbare Steckverbindung 6 ausgebildet ist. In diesem Ausführungsbeispiel ist die Steckverbindung 6 in dem Bereich vorgesehen, in welchem die Säule 2 an dem Fuß 4 befestigt ist. In einer Weiterbildung der Erfindung kann die Steckverbindung alternativ oder zusätzlich in einem Bereich vorgesehen sein, in welchem der Bohrkopf 3 an der Säule 2 befestigt ist.

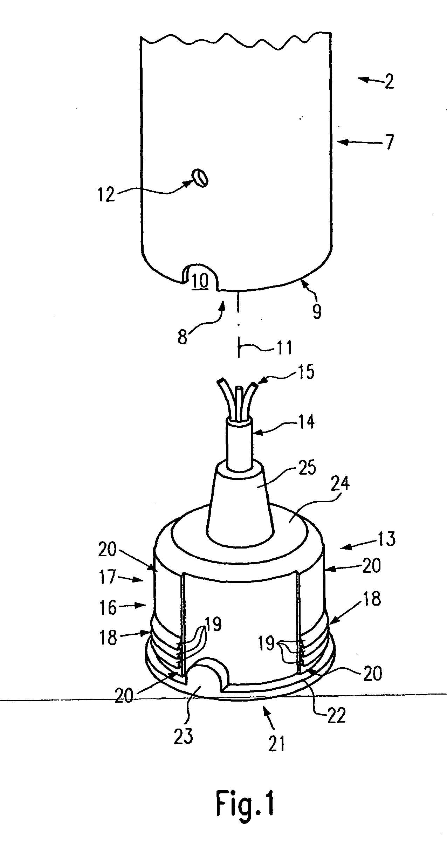

In Figur 1 ist die Säule 2 abschnittsweise mit einem fußseitigen Ende 7 gezeigt. Die Säule 2 ist im wesentlichen länglich und hohlzylindrisch ausgebildet. Dabei bildet das hohlzylindrische Innere der Säule 2 den Aufnahmeraum 8, in welchem der Stromversorgungsstrang 5 verläuft.

Im Bereich einer Endfläche 9 des fußseitigen Endes 7 weist die Säule 2 eine sich zu der Endfläche 9 hin öffnende, etwa U-förmig ausgebildete Aussparung 10 auf. Parallel zu einer Mittelachse 11 der Säule 2 ist zu der Aussparung 10 beabstandet eine sich radial erstreckende Stiftbohrung 12 vorgesehen.

In einer anderen Ausführungsform der Erfindung kann alternativ oder zusätzlich an einem bohrkopfseitigen Ende der Säule eine Aussparung ausgebildet sein.

Die Steckverbindung 6 weist einen abschnittsweise in den Aufnahmeraum 8 der Säule 2 einsetzbaren ersten Stecker 13 auf. An den ersten Stecker 13 ist ein zu dem Stromversorgungsstrang 5 gehörender erster Kabelabschnitt 14 angeschlossen, welcher zu dem Bohrkopf 3 führt. In Figur 1 ist ein Stück des ersten Kabelabschnittes 14 mit einzelnen Leitern 15 angedeutet.

Der erste Stecker 13 weist einen im Wesentlichen hohlzylindrischen Abschnitt 16 auf, an dessen Außenoberfläche Klemmprofile 18 vorgesehen sind. Die Klemmprofile 18 weisen jeweils mehrere, in diesem Fall drei, sich radial nach außen erhebende Umfangsrippen 19 auf. Die Umfangsrippen 19 erstrecken sich jeweils über einen Abschnitt des Umfanges des hohlzylindrischen Abschnittes 16. In dem Umfangsbereich der Klemmprofile 18 ist der hohlzylindrische Abschnitt 16 jeweils materialverstärkt und/oder versteift ausgebildet, was mit dem Bezugszeichen 20 angezeigt ist.

Gegenüberliegend dem abgehenden ersten Kabelabschnitt 14 ist an dem hohlzylindrischen Abschnitt 16 ein sich radial auswärts erstreckender Anlageflansch 21 ausgebildet. Der Anlageflansch 21 weist eine säulenseitige Anlagefläche 22 auf, mit welcher er in Anlage an die Endfläche 9 der Säule 2 bringbar ist. Von dem Anlageflansch 21 ausgehend ist an dem hohlzylindrischen Abschnitt 16 eine erste Richtnase 23 ausgebildet, deren Außenkontur zu der Form der Aussparung 10 der Säule 2 korrespondiert.

Auf der Seite des ersten Kabelabschnittes 14 ist ein sich radial einwärts erstreckender Plattenabschnitt 24 angeordnet, an welchem ein männlicher Stecker 25 ausgebildet ist. Der männliche Stecker 25 ist außen kegelstumpfartig geformt und hält einen Teil des ersten Kabelabschnittes 14.

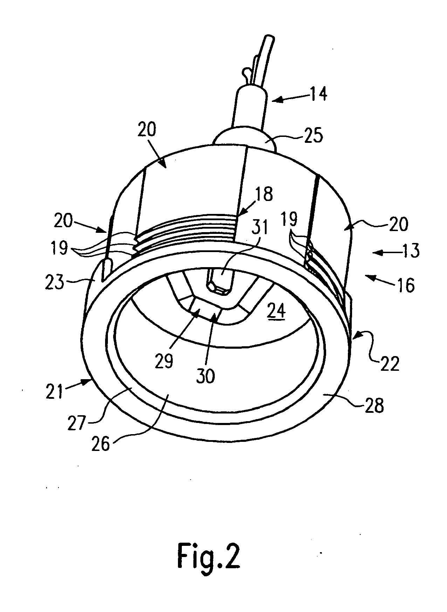

In der perspektivischen Darstellung von Figur 2 ist das Innere und Untere des ersten Steckers 13 veranschaulicht. Der hohlzylindrische Abschnitt 16 weist eine zylindrische Innenwand 26 auf, an die sich im Bereich des Anlageflansches 21 eine Fase 27 anschließt. Der Anlageflansch 21 weist gegenüberliegend der säulenseitigen Anlagefläche 22 eine Endanlagefläche 28 auf.

Von dem Plattenabschnitt 24 erstreckt sich das Innere des männlichen Steckers 25 als eine männliche Steckaufnahme 29 ausgebildet, die eine Vertiefung 30 aufweist, in welcher männliche Kontakte 31 angeordnet sind. In der Darstellung von Figur 2 ist jedoch nur ein männlicher Kontakt 31 zu sehen. Als Übergang von der Vertiefung 30 zu dem Plattenabschnitt 24 ist eine Fase 32 ausgebildet.

Alternativ kann anstelle des männlichen Steckers 25 ein weiblicher Stecker bei dem ersten Stecker 13 vorgesehen sein.

Wird der erste Stecker 13 in den Aufnahmeraum 8 der Säule 2 eingeführt, wird die erste Richtnase 23 in der Aussparung 10 der Säule 2 formschlüssig aufgenommen. Dadurch wird der erste Stecker 13 relativ zu der Säule 2 in einer vorbestimmten Lage ausgerichtet.

Ferner sind die Klemmprofile 18 in Anlage mit der Innenoberfläche des Aufnahmeraumes 8, wobei der durch die Klemmprofile definierte Außendurchmesser des ersten Steckers 13 etwas größer ist als der Innendurchmesser des Aufnahmeraumes 8. Hierdurch liegen die Klemmprofile 18 mit Druck an dem Inneren der Säule 2 an, wobei die Umfangsrippen etwas verformt sind. Durch diesen Druck und durch die rippenartige Ausbildung der Klemmprofile 18 ist der erste Stecker 13 gegen ein Bewegen entgegen einer Löserichtung der Steckverbindung 6 gehemmt an der Säule 2 befestigt. Die Klemmprofile 18 verkörpern somit eine Zugentlastung des ersten Steckers 13 gegenüber der Säule. Durch die Zugentlastung bleibt bei einem Lösen der Steckverbindung 6 der erste Kabelabsthnitt 14 in einem zugentspannter Zustand.

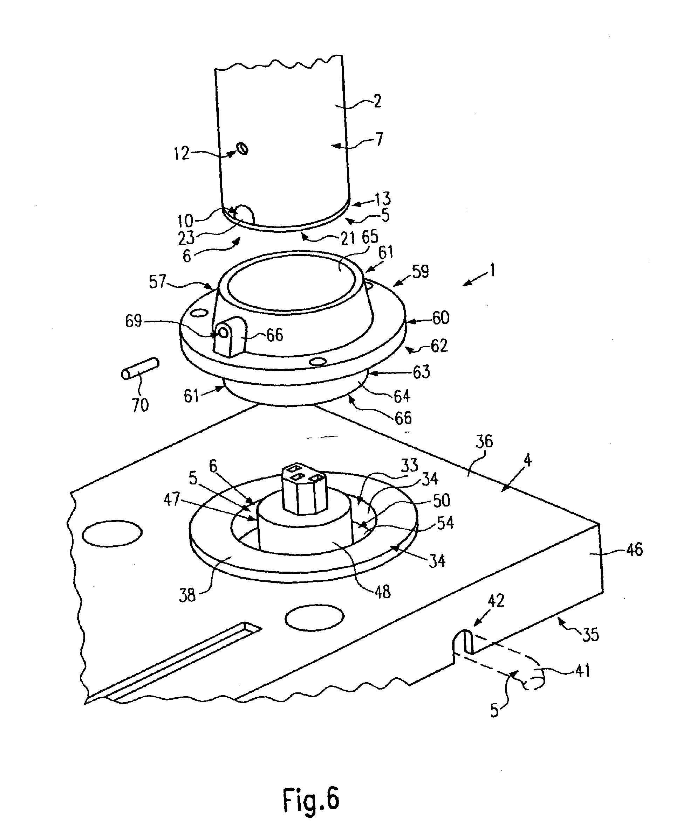

In Figur 6 ist der erste Stecker 13 im an die Säule 2 montierten Zustand gezeigt.

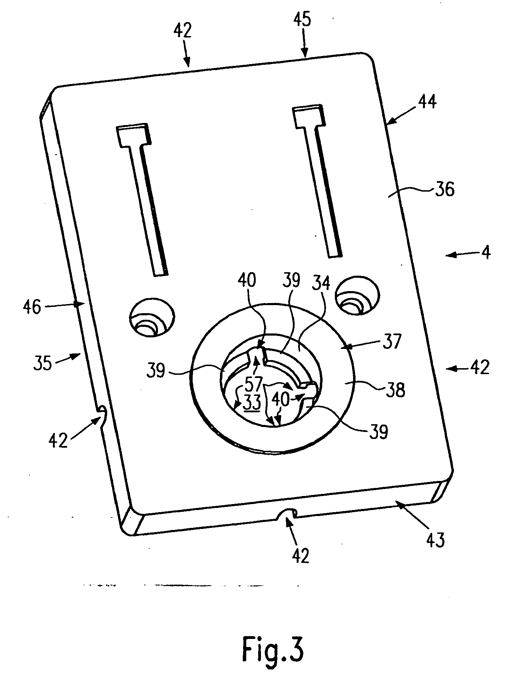

In Figur 3 ist der Fuß 4 veranschaulicht. Der Fuß 4 weist eine Aufnahmeöffnung 33 auf, welche einen zylindrischen Abschnitt 34 hat, dessen Längsrichtung etwa senkrecht zu einer Standfläche 35 des Fußes 4 verläuft. Die Aufnahmeöffnung 33 ringförmig umgebend ist ein Fußflansch 37 mit einer etwa zu der Standfläche 35 parallelen Fußflanschanlagefläche 38 ausgebildet. Der Fußflansch 37 steht von einer Oberseite 36 des Fußes 4 vor.

Die Aufnahmeöffnung 33 weist mehrere sich von dem zylindrischen Abschnitt 34 radial einwärts erstreckende, kreisringabschnittartig ausgebildete Haltevorsprünge 39 auf. Zwischen den Haltevorsprüngen sind Lücken 57 vorgesehen, in deren Bereich der zylindrische Abschnitt 34 Kabeleinlässe 40 aufweist, welche abschnittsweise U-förmig und zu der Standfläche 35 hin offen ausgebildet sind. Femer weist der Fuß 4 vier Aussparungen 42 auf, die jeweils an einer seiner Außenseite 43, 44, 45, 46 münden und zu einer Standfläche 35 geöffnet U-förmig ausgebildet sind. Durch die Aussparungen 42 ist ein zweiter Kabelabschnitt des Versorgungsstranges 5 aus dem Fuß 4 herausführbar. Durch die Kabeleinlässe 40 ist der zweite Kabelabschnitt 41 in die Aufnahmeöffnung 33 einführbar.

Im Bereich des Fußes 4 ist eine in Figur 3 nicht gezeigte Vorratsaufnahme für den Stromversorgungsstrang 5 kabelspinnenartig oder kabeltrommelartig ausgebildet vorgesehen. Die Vorratsaufnahme dient dem Verstauen des zweiten Kabelabschnittes 41, wenn die Säulenbohrmaschine 1 vom Netz genommen ist, oder zum Verstauen nicht benötigter Länge des zweiten Kabelabschnittes 41.

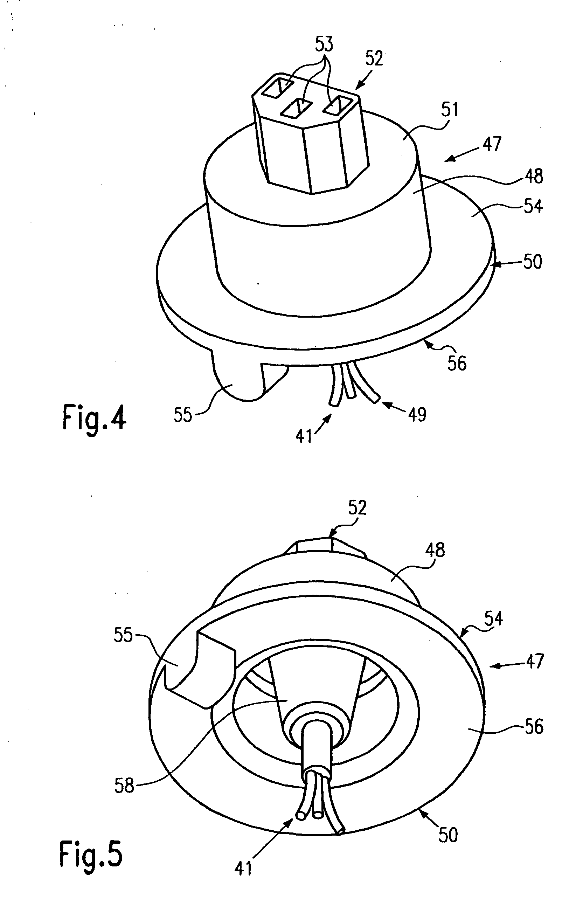

Ein zweiter Stecker 47 der Steckverbindung 6 ist in Figur 5 in einer ersten perspektivischen Ansicht gezeigt. Der zweite Stecker 47 ist korrespondierend zu und einsteckbar in den ersten Stecker 13 ausgebildet. An den zweiten Stecker 47 ist der zweite Kabelabschnitt 41 des Stromversorgungsstranges 5 angeschlossen, wobei der zweite Kabelabschnitt 41 in Figur 5 nur abschnittsweise mit einzelnen Leitern 49 gezeigt ist.

Der zweite Stecker 47 weist einen zylindrischen Abchnitt 48 und einen sich äuf Seiten des zweiten Kabelabschnittes 41 radial hiervon erstreckenden Auflageflansch 50 auf. Der zylindrische Abschnitt 48 korrespondiert zu der zylindrischen Innenwand 26 des ersten Steckers 13 und der Anlageflansch 50 zu dem Anlageflansch 21 des ersten Steckers 13.

Gegenüberliegend dem Auflageflansch 50 des zweiten Steckers 47 ist an dem zylindrischen Abschnitt 48 ein sich radial einwärts erstreckender Plattenabschnitt 51 ausgebildet, an welchem ein zu der männlichen Steckaufnahme 29 des ersten Steckers 13 korrespondierender weiblicher Stecker ausgebildet ist. Der weibliche Stecker 52 erstreckt sich in Längsrichtung des zylindrischen Abschnittes 48 etwa senkrecht von dem Plattenabschnitt 51 auswärts. Der weibliche Stecker 52 weist Stecköffnungen 53 auf, in die die männlichen Kontakte 31 des ersten Steckers 13 einführbar sind.

Alternativ kann anstelle des weiblichen Steckers 52 ein männlicher Stecker bei dem zweiten Stecker 47 vorgesehen sein.

Der Auflageflansch 50 des zweiten Steckers 47 weist auf Seiten des zylindrischen Abschnittes 48 eine ringförmige Auflagefläche 54 auf. Gegenüberliegend der ringförmigen Auflagefläche 54 ist an dem Auflageflansch eine in axialer Richtung des zylindrischen Abschnittes 48 vorstehende zweite Rastnase 55 ausgebildet. Auf der Seite der zweiten Rastnase 55 weist der Auflageflansch 55 eine Aufsetzfläche 56 auf.

Die zweite Rastnase 55 passt jeweils in die Lücken 57 zwischen den Haltevorsprüngen 39 des Fußes 4. Bei einem Einsetzen des zweiten Steckers 47 in die Aufnahmeöffnung 33 wird der Stecker 47 durch die zweite Rastnase 55 in einer vorbestimmten Position relativ zu dem Fuß 4 positioniert. Die Aufsetzfläche 56 des Auflageflansches 50 liegt abschnittsweise auf den Haltevorsprüngen 39 der Aufnahmeöffnung 33 auf. Der Außendurchmesser des Aufnahmeflansches 50 ist dabei geringfügig kleiner als der Durchmesser des zylindrischen Abschnittes 34 der Aufnahmeöffnung 33.

In Figur 5 ist der zweite Stecker 47 perspektivisch von unten gezeigt. Der zylindrische Abschnitt 48 des zweiten Steckers 47 ist hohlzylindrisch ausgebildet, wobei sich ein kegelstumpfartiger Kabelhalter 58 von dem Plattenabschnitt 51 her in das Innere des zylindrischen Abschnittes 48 erstreckt. Der Kabelhalter 58 nimmt einen Abschnitt des zweiten Kabelabschnittes 41 auf.

Bei einer Weiterbildung der Erfindung kann alternativ oder zusätzlich ein analoger zweiter Stecker vorgesehen sein, der analog an dem Bohrkopf 3 anbringbar ist. Dabei kann der Bohrkopf 3 eine zu der Aufnahmeöffnung 33 des Fußes 4 analoge Aufnahmeöffnung aufweisen

In Figur 6 ist der zweite Stecker 47 in einem in die Aufnahmeöffnung 33 Fußes 4 eingesetzten Zustand gezeigt. Femer veranschaulicht Figur 6 in gestrichelten Linien ein durch die Aussparung 42 der Außenseite 46 des Fußes 4 aus dem Fuß 4 herausgeführten Teil des zweiten Kabelabschnittes 41.

Zum Befestigen der Säule 2 an dem Fuß 4 ist ein Flanschteil 59 vorgesehen. Das Flanschteil 59 weist einen Anbringungsflansch 60 und eine Säulenbuchse 61 auf. Der Anbringungsflansch 60 ist in etwa ringförmig ausgebildet und erstreckt sich radial auswärts von der Säulenbuchse 61. Eine Unterseite 62 des Anbringungsflansches 60 ist korrespondierend zu der Fußflanschanlagefläche 38 ausgebildet und im Wesentlichen formschlüssig an dieser befestigbar.

Ein sich unterhalb des Anbringungsflansches 60 erstreckender Teil der Säulenbuchse 61 ist als ein hohlzylindriger Distanzabschnitt 63 ausgebildet. Der Distanzabschnitt 63 weist eine äußere Umfangsfläche 64 auf, die konzentrisch zu einer sich durch die gesamte Säulenbuchse 61 erstreckenden zylindrischen Innenfläche 65 ist. Die zylindrische Innenfläche 65 ist korrespondierend zu der äußeren Kontur des fußseitigen Endes 7 der Säule 2 ausgebildet, wobei das fußseitige Ende 7 der Säule 2 in den mit der zylindrischen Innenfläche 65 ausgebildeten Innenraum des Flanschteiles 59 einführbar ist.

Die äußere Umfangsfläche 64 des Distanzabschnittes 63 ist korrespondierend zu dem zylindrischen Abschnitt 34 der Aufnahmeöffnung 33 des Fußes 4 ausgebildet, wobei der Distanzabschnitt 63 in die Aufnahmeöffnung 33 einführbar ist. Dabei kommt die Unterseite 62 des Anbringungsflansches 60 in Anlage mit der Fußflanschfläche 38 des Fußes 4 und eine Endstimfläche 66 des Distanzabschnittes 63 kommt in Anlage mit der Anlagefläche 54 des Anlageflansches 50 des zweiten Steckers 47. In diesem Zustand wird das Flanschfeil 59 mit dem Fuß 4 verschraubt.

Dann wird das fußseitige Ende 7 der Säule 2 in den Innenraum der Säulenbuchse 61 eingeführt, wobei damit gleichzeitig der erste und der zweite Stecker 13, 47 der Steckverbindung 6 zusammengesteckt werden. Die Säule 2 wird soweit in die Säulenbuchse 61 eingeführt, bis sich der Anlageflansch 21 des ersten Steckers 13 in Anlage zu dem Anlageflansch 50 des zweiten Steckers 47 befindet.

Im an dem Fuß 4 befestigten Zustand hält das Flanschteil 59 den zweiten Stecker 47 gegen ein Bewegen entgegen der Löserichtung der Steckverbindung 6. Damit verkörpert das Flanschteil 59 eine Zugentlastung des zweiten Steckers 47 gegenüber dem Fuß 4, durch welche bei einem Lösen der Steckverbindung 6 der zweite Kabelabschnitt 41 zugentspannt bleibt.

An einem oberen Abschnitt 57 der Säulenbuchse 61 ist sich radial auswärts erstreckend im Bereich des Anbringungsflansches eine Stiftverstärkung 68 mit einem Stiftloch 69 vorgesehen. Ist die Säule 2 in das Flanschteil 59 und somit in die Aufnahmeöffnung 33 des Fußes 4 eingeführt, wird ein Stift 70 durch das Stiftloch 69 des Flanschteiles 59 bis in die Stiftbohrung 12 der Säule 2 geführt, wodurch die Säule 2 in ihrer Relativlage zu dem Flanschteil 59 gesichert wird.

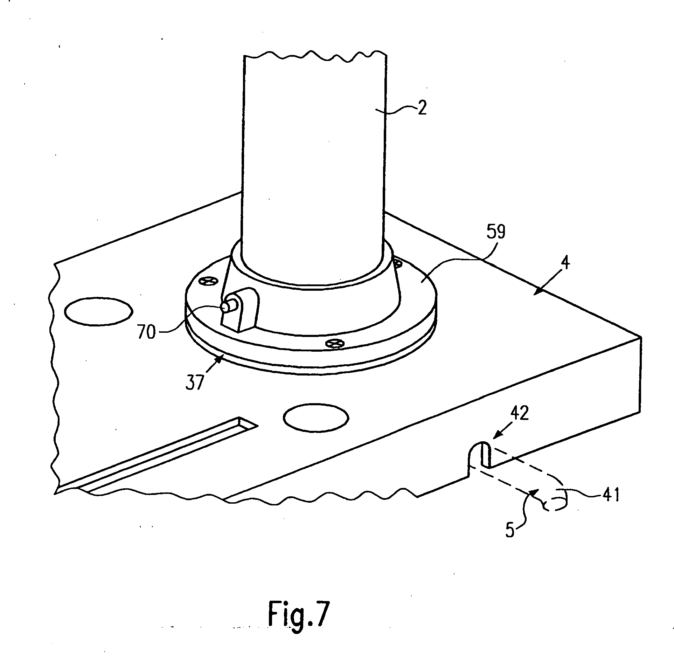

Mit dem Flanschteil 59 ist die Säule 2 zentriert und formschlüssig an dem Fuß 4 gelagert, wobei die Steckverbindung 6 abschnittsweise im Inneren des Flanschteiles 59 angeordnet ist. Figur 7 zeigt diese im montierten Zustand.

Bei einer Weiterbildung der Erfindung kann alternativ oder zusätzlich ein analoges Flanschteil im Bereich zwischen der Säule und Bohrkopf vorgesehen sein, das analoge Funktionen haben kann wie das im Bereich von Säule 2 und Fuß 4 vorgesehene Flanschteil 59.

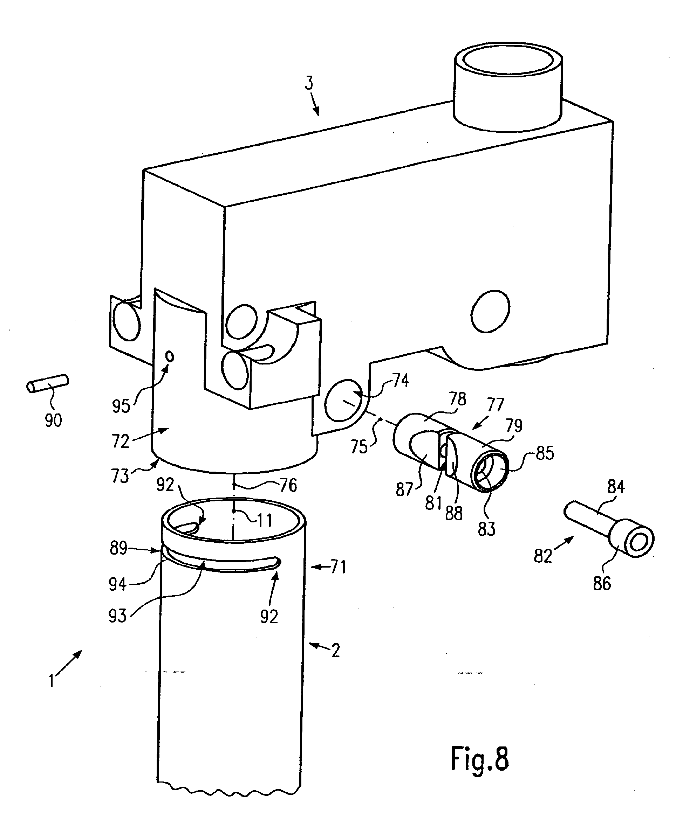

Wie Figur 8 zu entnehmen ist, weist die Säule 2 ein bohrkopfseitiges Ende 71 auf. Der Bohrkopf 3 weist einen Stutzen 72 auf, welcher innen zylindrisch korrespondierend zu dem bohrkopfseitigen Ende 71 der Säule 2 ausgebildet ist und in welchen das bohrkopfseitige Ende 71 der Säule 2 einführbar ist. Durch den zylindrischen Innenraum 73 des Stutzens 72 und der Säule 2 ist der Bohrkopf 3 relativ zu der Säule 2 um deren Mittelachse 11 schwenkbar.

Im Bereich des Stutzens 72 weist der Bohrkopf 3 eine den Innenraum 73 des Stutzens 72 schneidende Bohrung auf. Dabei verläuft die Mittelachse 75 der Bohrung 74 etwa quer zu der Mittelachse 76 des Innenraumes 73 des Stutzens 72. In der Bohrung 74 ist ein Klemmer 77 positionierbar, der ein erstes Klemmelement 78 und ein zweites Klemmelement 79 aufweist. Die beiden Klemmelemente 78, 79 haben abschnittsweise eine zylinderförmige Außenoberfläche, welche zu der Bohrung 74 des Bohrkopfes 3 korrespondiert.

Das erste Klemmelement 78 weist eine Gewindebohrung 81 auf, in welche eine Schraube 82 des Klemmers 77 einschraubbar ist. Das zweite Klemmelement 79 weist eine Durchgangsbohrung 83 auf, durch welche der Gewindeabschnitt 84 der Schraube 82 hindurchführbar ist, und eine Schraubkopfaufnahme 85 in der der Schraubenkopf 86 der Schraube 82 aufnehmbar und mit dem zweiten Klemmelement 79 in Anlage bringbar ist. Der Abstand der beiden Klemmelemente 78, 79 ist mit Hilfe der Schraube 82 zueinander einstellbar, wobei die Gewindebohrung 81 und die Schraube 82 als ein Übersetzungsgetriebe dienen.

Das erste und das zweite Klemmelement 78, 79 weisen jeweils eine zu der Außenkontur der Säule 2 korrespondierende Anlagefläche 87, 88 auf. Ist die Säule 2 in den Stutzen 72 eingeführt und befindet sich der Klemmer 77 in der Bohrung 74, sind durch Verringern des Abstandes der beiden Klemmelemente 78, 79 zueinander die beiden Anlageflächen 87, 88 jeweils in klemmende Anlage an die Säule 2 bringbar. Hierdurch wird eine Reibkraft zwischen der Säule 2 und dem Klemmer 77 aufgebracht, welche umso größer ist, je fester die beiden Klemmelemente 78, 79 zueinander gezogen sind. Die somit zwischen Klemmer 77 und Säule 2 aufgebrachte Andrückkraft wird von der Bohrung 74 des Bohrkopfes 3 aufgenommen, in der der Klemmer 77 radial bezüglich der Säule 2 an dem Bohrkopf 3 abgestützt ist.

Durch die Aufnahme des Klemmers 77 in der Bohrung 74 ist ein Schwenken des Klemmers 77 um die Mittelachse 76 des Stutzens 72 oder die Mittelachse 11 der Säule 2 unterbunden. Der Klemmer 77 ist durch seine Aufnahme in der Bohrung 74 radial bezüglich der Säule 2 rückgehalten. Durch Festklemmen des lösbar gelagerten Klemmers 77 wird ein Schwenken des Bohrkopfes 3 gegenüber der Säule 2 gehemmt.

Der Klemmer 77 ist auch bei anderen Maschinen oder Vorrichtungen als der vorliegenden Säulenbohrmaschine einsetzbar. Der Klemmer 77 kann überall dort verwendet werden, wo eine Komponente drehbar an einem säulenartigen Element gelagert ist, beispielsweise eine Gehäusekomponente an einer runden Säule. Mit dem Klemmer 77 ist die Komponente in einer Relativposition zu dem säulenartigen Element lösbar fixierbar. Das Verwenden des Klemmers 77 ist dabei unabhängig von der Art und der Führung eines Stromversorgungsstranges.

Im Bereich ihres bohrkopfseitigen Endes 71 weist die Säule 2 eine sich umfänglich erstreckende Ausnehmung 89 auf. In der Ausnehmung 89 ist ein Schwenkbegrenzungsstift 90 zwischen einem ersten Anschlagende 91 und einem zweiten Anschlagende 92 der Ausnehmung 89 führbar.

Die Ausnehmung 89 ist als etwa quer zur Längsrichtung 11 der Säule 2 verlaufende Nut ausgebildet und hat Ränder 93, 94, deren Abstand nur geringfügig größer ist als der Durchmesser des Schwenkbegrenzungsstiftes 90.

Der Stutzen 72 des Bohrkopfes 3 weist eine radiale Stiftbohrung 95 auf, in welche der Schwenkbegrenzungsstift 90 einführbar ist. Im in den Stutzen 72 eingeführten Zustand der Säule 2 ragt der Schwenkbegrenzungsstift 90 in den Innenraum 73 des Stutzens 72 und in die Ausnehmung 89 der Säule 2. Bedingt durch die Ausbildung der Ausnehmung 89 begrenzt der Schwenkbegrenzungsstift 90 durch ein Anschlagen an eines der beiden Anschlagenden 91, 92 jeweils eine Schwenkbewegung des Bohrkopfes 3 relativ zu der Säule. Gleichzeitig ist der Bohrkopf 3 durch den Schwenkbegrenzungsstift 90 gegen ein unbeabsichtigtes Abnehmen von der Säule 2 gesichert, da ein Bewegen des Schwenkbegrenzungsstiftes 90 in Längsrichtung der Mittelachse 11 der Säule 2 durch die Ränder 93, 94 der Ausnehmung 89 blockiert ist. Der Schwenkbegrenzungsstift 90, die Stiftbohrung 95 und die Ausnehmung 89 der Säule 2 bilden eine Schwenkbegrenzungsvorrichtung.

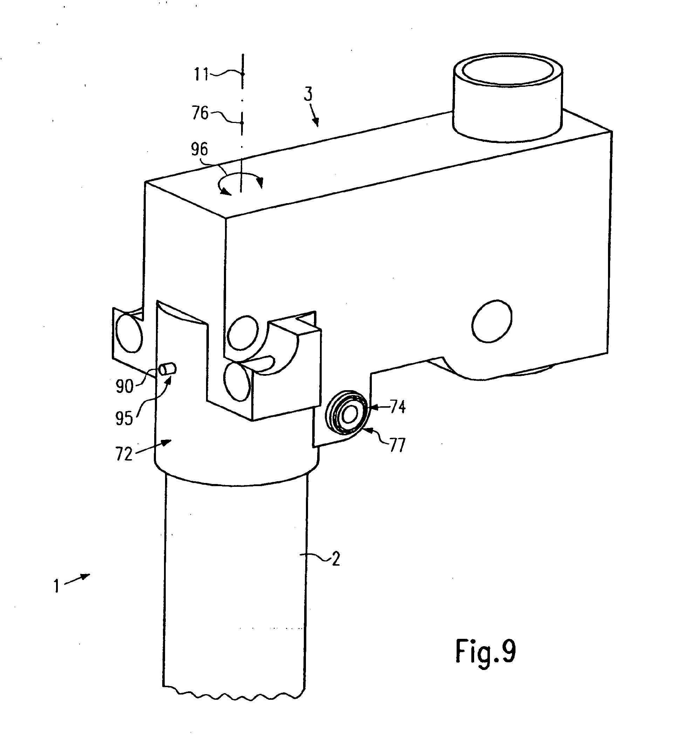

Figur 9 zeigt den Bohrkopf 3 in einem an die Säule 2 montierten Zustand. Dabei ist der Schwenkbegrenzungsstiff 90 in die Stiftbohrung 95 eingefuhrt und ragt somit in die Ausnehmung 89 der Säule 2 hinein. Der Klemmer 77 befindet sich in montiertem Zustand in der Bohrung 74 des Bohrkopfes 3.

Ferner ist in Figur 9 die Schwenkbarkeit des Bohrkopfes 3 um die Mittelachse 11 der Säule 2 durch den Pfeil 96 angedeutet. Von einer Ausgangslage, in der der Bohrkopf 3 und der Fuß 4 bezüglich ihrer Langsrichtungen auf der selben Seite der Säule 2 etwa längs zueinander ausgerichtet sind, ist der Bohrkopf 3 zu jeder Seite um etwa 90° schwenkbar, womit der Bohrkopf 3 um etwa 180° schwenkbar ist.

In Figur 10 ist eine teilweise geschnittene Ansicht der erfindungsgemäßen Säulenbohrmaschine 1 gezeigt. Insbesondere ist veranschaulicht, wie der zweite Kabelabschnitt 41 des Stromversorgungsstranges 5 durch eine der Aussparungen 42 in den Fuß 4 eintritt und ein Teil des zweiten Kabelabschnittes 41 von der hier kabeltrommelartig ausgebildeten Vorratsaufnahme 97 aufgewickelt bevorratet ist. Von der Vorratsaufnahme 97 führt der zweite Kabelabschnitt 41 weiter zu dem zweiten Stecker 47 der Steckverbindung 6. Der zweite Stecker 47 ist mit dem ersten Stecker 13 zusammengesteckt, wobei sich dieser abschnittsweise in dem Aufnahmeraum 8 der Säule 2 befindet. Von dem ersten Stecker 13 führt der erste Kabelabschnitt 14 durch den Aufnahmeraum 8 frei hängend in das Innere des Bohrkopfes 3. Wegen dieser freien Führung des Stromversorgungsstranges 5 von der Säule 2 in den Bohrkopf 3 ist die oben erwähnte Schwenkbegrenzungsvorrichtung 90, 95, 89 vorgesehen, um ein Überbeanspruchen des Stromversorgungsstranges 5 durch ein Schwenken des Bohrkopfes 3 zu vermeiden.

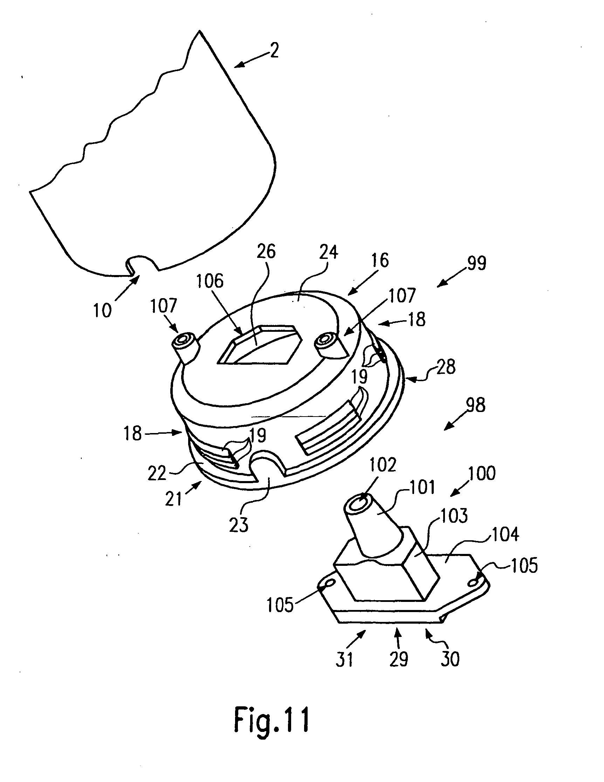

In Figur 11 ist eine alternative Ausführungsform des ersten Steckers gezeigt. Gleiche Elemente haben gleiche Bezugszeichen und die gleiche Funktion wie bei dem ersten Stecker 13 der ersten Ausführungsform der Erfindung.

Der alternative erste Stecker 98 weist ein Befestigungsmodul 99 und ein dazu separates elektrisches Steckverbindungsmodul 100 auf. Das elektrische Steckverbindungsmodul 100 ist lösbar an dem Einsatz 99 anbringbar.

Das elektrische Steckverbindungsmodul 100 weist einen kegelstumpfartigen Abschnitt 101 mit einem Loch 102 auf, in dem ein Endbereich des ersten Kabelabschnittes 14 aufnehmbar ist. An den kegelstumpfartigen Abschnitt 101 schließt sich ein Steckbereich 103 an, der bei dieser Ausführungsform eine sechseckige Außenkontur hat. An den Steckbereich 103 schließt sich ein sich radial auswärts erstreckender Befestigungsflansch 104 mit zwei Befestigungslöchern 105 an. Im Bereich des Befestigungsflansches 104 und eines Abschnittes des Steckbereiches 103 hat das Steckverbindungsmodul 100 die Vertiefung 30 mit männlicher Steckaufnahme 29 und männlichen Kontakten 31. Abweichend hierzu kann das Steckverbindungsmodul 100 auch als ein weibliches Steckelement ausgebildet sein.

Das Befestigungsmodul 99 des alternativen ersten Steckers 98 ist genauso wie der erste Stecker 13 der ersten Ausführungsform an einem Ende der Säule 2 in deren Aufnahmeraum 8 einführbar, zu der Säule 2 positionierbar und mit Hilfe der Klemmprofile 18 zugentlastbar. Das Befestigungsmodul 99 weist in seinem Plattenabschnitt 24 eine sechseckige Öffnung 106 auf, die zu der Außenkontur des Steckbereiches 103 des Steckverbindungsmoduls 100 korrespondiert.

Zum Montieren des alternativen ersten Steckers 98 wird das elektrische Steckverbindungsmodul 100 mit seinem kegelstumpfartigen Abschnitt 101 voran in das Innere des Befestigungsmoduls 99 und durch dessen Öffnung 106 geführt, bis im Inneren des Befestigungsmoduls 99 der Befestigungsflansch 104 an dem Plattenabschnitt 24 anliegt. Dabei ist der Steckbereich 103 abschnittsweise formschlüssig in der Öffnung 106 aufgekommen.

Zum Befestigen des elektrischen Steckverbindungsmoduls 100 an dem Befestigungsmodul 99 werden durch die Befestigungslöcher 105 nicht gezeigte Schrauben eingeführt und in Einschraubstutzen 107 des Befestigungsmoduls 99 eingeschraubt, wodurch das Steckverbindungsmodul 100 lösbar an dem Befestigungsmodul 99 befestigt ist.

Das Befestigungsmodul 99 und das elektrische Steckverbindungsmodul 100 sind jeweils dazu geeignet, standardisiert zu werden, insbesondere in Bezug auf zueinander korrespondierende Bereiche beider Module. Standardisiert sind dann verschiedene Module miteinander kombinierbar.

Auch der zweite Stecker der Steckverbindung 6 kann analog zu dem alternativen ersten Stecker 98 ein Befestigungsmodul und ein dazu separates elektrisches Steckverbindungsmodul aufweisen, welches lösbar an dem Befestigungsmodul anbringbar ist.

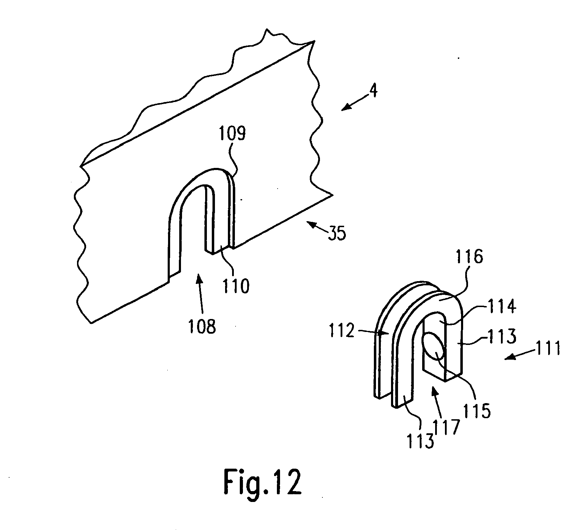

In Figur 12 ist ein Abschnitt des Fußes 4 mit einer alternativ ausgebildeten Aussparung 108 gezeigt. Die Aussparung 108 ist wie die Aussparung 42 der ersten Ausführungsform im Wesentlichen U-förmig und zu der Standfläche 35 des Fußes 4 hin geöffnet ausgebildet. Jedoch weist die alternative Aussparung 108 an ihrem inneren Umfang 109 einen einstückig mit dem Fuß 4 ausgebildeten U-Körper 110 auf. Die Stärke des U-Körpers 110 ist geringer als die Wandstärke des Fußes 4 im Bereich der alternativen Aussparung 108.

In die alternative Aussparung 108 ist ein zu ihrem inneren Umfang 109 und zu dem U-Körper 110 korrespondierend ausgebildetes etwa U-förmiges Halteelement 111 einsetzbar. Das Halteelement 111 weist an seinem äußeren Umfang eine Außennut 112 auf, in der der U-Körper 110 der alternativen Aussparung 108 wenigstens abschnittsweise aufgenommen ist, wenn das Halteelement 111 in die alternative Aussparung 108 eingesetzt ist.

Wenigstens im Bereich einer seiner U-Enden 113 weist das Halteelement 111 an seinem U-Inneren 117 einem hiervon vorstehenden Buckel 115 auf. Der Buckel 115 ist bei der vorliegenden Ausführungsform etwa kugelabschnittsartig ausgebildet und dient dem Halten des zweiten Kabelabschnittes 41 im in das U-Innere des Halteelementes 111 eingesetztem Zustand. Dabei wird der zweite Kabelabschnitt 41 im Bereich zwischen dem Buckel 115 und dem U-Bogen 116 des Halteelementes 111 gehalten bzw. fixiert.

Das Halteelement 111 ist vorzugsweise aus einem elastischen oder elasthomerischen Material hergestellt, wie z.B. Gummi.

## Patentansprüche

1. Säulenbohrmaschine (1) mit einem an einer Säule (2) gelagerten Bohrkopf (3) und einem Fuß (4) zum Lagern der Säule (2), sowie einem zu dem Bohrkopf (3) führenden Stromversorgungsstrang (5), wobei ein sich etwa längs im Inneren der Säule (2) erstreckender Aufnahmeraum (8) vorgesehen ist, in dem der Stromversorgungsstrang (5) wenigstens abschnittsweise etwa längs verlaufend angeordnet ist, wobei im Bereich von Fuß (4) und Säule (2) und/oder im Bereich von Säule (2) und Bohrkopf (3) eine zusammenfügbare Trennstelle des Stromversorgungsstranges (5) vorgesehen ist,
**dadurch gekennzeichnet,**
**dass** die Trennstelle als lösbare Steckverbindung (6) ausgebildet ist.

2. Säulenbohrmaschine nach Anspruch 1,
**dadurch gekennzeichnet,**
**dass** der Stromversorgungsstrang (5) vom Fuß (4) bis zum Bohrkopf (3) im Inneren der Säulenbohrmaschine (1) verläuft.

3. Säulenbohrmaschine nach Anspruch 1 oder 2,
**dadurch gekennzeichnet,**
**dass** die Steckverbindung (6) wenigstens bereichsweise im Inneren der Säule (2) vorgesehen ist.

4. Säulenbohrmaschine nach einem der vorhergehenden Ansprüche,
**dadurch gekennzeichnet,**
**dass** die Steckverbindung (6) wenigstens einen Stecker (13, 47) aufweist, welcher durch eine Zugentlastung gegenüber der Säule (2) und/oder dem Fuß (4) und/oder dem Bohrkopf (3) gegen ein Bewegen entgegen der Löserichtung der Steckverbindung (6) gehemmt ist.

5. Säulenbohrmaschine nach Anspruch 4,
**dadurch gekennzeichnet,**
**dass** die Zugentlastung eines ersten Steckers (13) gegenüber der Säule (2) ein an dem ersten Stecker (13) und/oder der Säule (2) vorgesehenes Klemmprofil (18) ist.

6. Säulenbohrmaschine nach einem der Ansprüche 4 oder 5,
**dadurch gekennzeichnet,**
**dass** die Zugentlastung eines zweiten Steckers (47) gegenüber dem Fuß (4) oder dem Bohrkopf (3) ein separates Flanschteil (59) ist, welches den zweiten Stecker (47) entgegen der Löserichtung der Steckverbindung (6) an dem Fuß (4) oder dem Bohrkopf (3) hält.

7. Säulenbohrmaschine nach einem der vorhergehenden Ansprüche,
**dadurch gekennzeichnet,**
**dass** die Steckverbindung (6) wenigstens einen Stecker (13, 47) aufweist, der wenigstens eine Richtnase (23, 55) hat, mit welcher er an der Säule (2) oder dem Fuß (4) oder dem Bohrkopf (3) ausgerichtet angebracht ist.

8. Säulenbohrmaschine nach einem der vorhergehenden Ansprüche,
**dadurch gekennzeichnet,**
**dass** die Steckverbindung (6) wenigstens einen Stecker (98) aufweist, welcher ein Befestigungsmodul (99) und ein dazu separates elektrisches Steckverbindungsmodul (100) hat, welches an dem Befestigungsmodul lösbar anbringbar ist.

9. Säulenbohrmaschine nach einem der vorhergehenden Ansprüche,
**dadurch gekennzeichnet,**
**dass** im Bereich des Fußes (4) eine Vorratsaufnahme für den Stromversorgungsstrang vorgesehen ist.

10. Säulenbohrmaschine nach Anspruch 9,
**dadurch gekennzeichnet,**
**dass** die Vorratsaufnahme kabelspinnenartig oder kabeltrommelartig ausgebildet ist.

11. Säulenbohrmaschine nach einem der vorhergehenden Ansprüche,
**dadurch gekennzeichnet,**
**dass** an dem Fuß (4) wenigstens eine Aussparung (42, 108) vorgesehen ist, durch welche der Stromversorgungsstrang (5) aus dem Bereich des Fußes (4) herausgeführt ist.

12. Säulenbohrmaschine nach Anspruch 11,
**dadurch gekennzeichnet,**
**dass** die Aussparung (108) ein in sie einsetzbares Halteelement (111) mit wenigstens einem Halteprofil (115) aufweist, mit welchem der Stromversorgungsstrang (5, 41) in einer vorbestimmten Position relativ zu dem Halteelement (111) fixierbar ist.

13. Säulenbohrmaschine nach einem der vorhergehenden Ansprüche,
**dadurch gekennzeichnet,**
**dass** ein Flanschteil (59) vorgesehen ist, mit welchem die Säule (2) zentriert an dem Fuß (4) gelagert ist.

14. Säulenbohrmaschine nach Anspruch 13,
**dadurch gekennzeichnet,**
**dass** eine Steckverbindung (6) wenigstens bereichsweise im Inneren des Flanschteiles (59) angeordnet ist.

15. Säulenbohrmaschine nach einem der Ansprüche 13 oder 14,
**dadurch gekennzeichnet,**
**dass** die Säule (2) und das Flanschteil (59) wenigstens je eine Bohrung (12, 69) aufweisen, durch die sich wenigstens abschnittsweise ein und dasselbe Fixiermittel (70) erstreckt.

16. Säulenbohrmaschine nach einem der vorhergehenden Ansprüche,
**dadurch gekennzeichnet,**
**dass** der Bohrkopf (3) gegenüber der Säule (2) verschwenkbar ist und eine Schwenkbegrenzungsvorrichtung (89, 90, 95) vorgesehen ist.

17. Säulenbohrmaschine nach Anspruch 16,
**dadurch gekennzeichnet,**
**dass** an der Säule (2) oder an dem Bohrkopf (3) eine Ausnehmung (89) vorgesehen ist und an dem Bohrkopf (3) oder der Säule (2) ein in der Ausnehmung (89) führbares Profil (90) vorgesehen ist, wobei die Schwenkbewegung durch Anlage des Profiles (90) an Endabschnitten (91, 92) der Ausnehmung (89) begrenzt ist.

18. Säulenbohrmaschine nach Anspruch 17,
**dadurch gekennzeichnet,**
**dass** die Ausnehmung (89) als quer zur Längsrichtung (11) der Säule (2) verlaufende Nut ausgebildet ist.

19. Säulenbohrmaschine nach einem der Ansprüche 16 bis 18,
**dadurch gekennzeichnet,**
**dass** zwischen Säule (2) und Bohrkopf (3) ein lösbarer Klemmer (77) gelagert ist, mit welchem ein Schwenken des Bohrkopfes (3) gegenüber der Säule (2) hemmbar ist.

20. Säulenbohrmaschine nach Anspruch 19,
**dadurch gekennzeichnet,**
**dass** der Klemmer (77) zwei in ihrem Abstand zueinander einstellbare Klemmelemente (78, 79) aufweist, welche jeweils mit der Säule (2) klemmend in Anlage bringbar sind, wobei der Klemmer (77) radial an dem Bohrkopf (3) abgestützt ist.

21. Säulenbohrmaschine nach Anspruch 20,
**dadurch gekennzeichnet,**
**dass** der Klemmer (77) einen Schraubmechanismus (82, 84) aufweist, mit welchem der Abstand der Klemmelemente (78, 79) zueinander einstellbar ist.

22. Säulenbohrmaschine nach einem der Ansprüche 20 oder 21,
**dadurch gekennzeichnet,**
**dass** wenigstens eines der Klemmelemente (78, 79) eine zu der Form der Säule (2) korrespondierende Anlagefläche (87, 88) aufweist.

23. Säulenbohrmaschine nach einem der Ansprüche 19 bis 22,
**dadurch gekennzeichnet,**
**dass** der Klemmer (77) in einem Hohlraum (74) des Bohrkopfes (3) aufgenommen ist, welcher von einem Stutzen (72) geschnitten ist, in welchem die Säule (2) bereichsweise aufgenommen ist.

## Claims

1. A pillar drilling machine (1) comprising a drill head (3) which is supported on a pillar (2), and a base (4) for supporting said pillar (2), as well as a power supply strand (5) leading to said drill head (3), wherein an accommodation chamber (8) is provided, which extends substantially longitudinally in the interior of said pillar (2), said power supply strand (5) being arranged, at least sectionwise, in said accommodation chamber (8) such that it extends substantially longitudinally, wherein in the area of the base (4) and the pillar (2) and/or in the area of the pillar (2) and the drill head (3) a respective connectable separation point of the power supply strand (5) is provided,
**characterized in that**
the separation point is implemented as a releasable plug connection (6).

2. A pillar drilling machine according to claim 1,
**characterized in that**
the power supply strand (5) extends from the base (4) to the drill head (3) in the interior of the pillar drilling machine (1).

3. A pillar drilling machine according to claim 1 or 2,
**characterized in that**
the plug connection (6) is, at least sectionwise, provided in the interior of the pillar (2).

4. A pillar drilling machine according to one of the preceding claims,
**characterized in that**
the plug connection (6) comprises at least one connector (13, 47), which is prevented from moving in a direction opposite to the release direction of the plug connection (6) by a tension relief relative to the pillar (2) and/or the base (4) and/or the drill head (3).

5. A pillar drilling machine according to claim 4,
**characterized in that**
the tension relief of a first connector (13) relative to the pillar (2) is a clamping profile
(18) provided on said first connector (13) and/or said pillar (2).

6. A pillar drilling machine according to one of the claims 4 or 5,
**characterized in that**
the tension relief of a second connector (47) relative to the base (4) or the drill head (3) is a separate flange member (59) that holds the second connector (47) on said base (4) or said drill head (3) in a direction opposite to the release direction of the plug connection (6).

7. A pillar drilling machine according to one of the preceding claims,
**characterized in that**
the plug connection (6) comprises at least one connector (13, 47) having at least one locating projection (23, 55) by means of which it is attached to the pillar (2) or the base (4) or the drill head (3) in an oriented manner.

8. A pillar drilling machine according to one of the preceding claims,
**characterized in that**
the plug connection (6) comprises at least one plug (98) comprising a fastening module (99) and, separately therefrom, an electric connector module (100) which is adapted to be releasably attached to said fastening module.

9. A pillar drilling machine according to one of the preceding claims,
**characterized in that**
a storage facility for the power supply strand is provided in the area of the base (4).

10. A pillar drilling machine according to claim 9,
**characterized in that**
the storage facility is implemented in the form of a cable spider or a cable drum.

11. A pillar drilling machine according to one of the preceding claims,
**characterized in that**
the base (4) has provided therein at least one opening (42, 108) through which the power supply strand (5) is led out of the area of the base (4).

12. A pillar drilling machine according to claim 11,
**characterized in that**
the opening (108) is provided with a holding element (111) which is adapted to be inserted in said opening (108) and which includes at least one holding profile (115) by means of which the power supply strand (5, 41) can be fixed at a predetermined position relative to said holding element (111).

13. A pillar drilling machine according to one of the preceding claims,
**characterized in that**
a flange member (59) is provided by means of which the pillar (2) is supported on the base (4) such that it is centered relative thereto.

14. A pillar drilling machine according to claim 13,
**characterized in that**
a plug connection (6) is arranged, at least sectionwise, in the interior of the flange member (59).

15. A pillar drilling machine according to one of the claims 13 or 14,
**characterized in that**
the pillar (2) and the flange member (59) each include at least one hole (12, 69) through which one and the same fixing means (70) extends at least sectionwise.

16. A pillar drilling machine according to one of the preceding claims,
**characterized in that**
the drill head (3) is adapted to be rotated relative to the pillar (2) and that a rotation limiting device (89, 90, 95) is provided.

17. A pillar drilling machine according to claim 16,
**characterized in that**
a recess (89) is provided on the pillar (2) or the drill head (3) and that a profile (90), which is adapted to be guided in said recess (89), is provided on said drill head (3) or said pillar (2), the rotary movement being limited **in that** the profile (90) comes into contact with the end portions (91, 92) of said recess (89).

18. A pillar drilling machine according to claim 17,
**characterized in that**
the recess (89) is implemented as a groove extending transversely to the longitudinal direction (11) of the pillar (2).

19. A pillar drilling machine according to one of the claims 16 to 18,
**characterized in that**,
between the pillar (2) and the drill head (3), a releasable clamping means (77) is supported by means of which the drill head (3) can be prevented from rotating relative to the pillar (2).

20. A pillar drilling machine according to claim 19,
**characterized in that**
the clamping means (77) comprises two clamping elements (78, 79) which are of such a nature that the distance between them can be adjusted and each of which is adapted to be brought into clamping engagement with the pillar (2), said clamping means (77) being radially supported on the drill head (3).

21. A pillar drilling machine according to claim 20,
**characterized in that**
the clamping means (77) is provided with a screw mechanism (82, 84) by means of which the distance between said clamping elements (78, 79) can be adjusted.

22. A pillar drilling machine according to one of the claims 20 or 21,
**characterized in that**
at least one of said clamping elements (78, 79) has a contact surface (87, 88) corresponding to the shape of the pillar (2).

23. A pillar drilling machine according to one of the claims 19 to 22,
**characterized in that**
the clamping means (77) is accommodated in a hollow space (74) of the drill head (3), which is intersected by a connection piece (72) in which the pillar (2) is accommodated sectionwise.

## Revendications

1. Perceuse à colonne (1) avec une tête de perçage (3) logée sur une colonne (2) et un pied (4) pour loger la colonne (2), ainsi qu'un toron d'alimentation électrique (5) allant à la tête de perçage (3), dans laquelle il est prévu un volume de réception (8), s'étendant à l'intérieur de la colonne (2) environ longitudinalement, dans au moins une section duquel le toron d'alimentation électrique (5) est disposé environ longitudinalement, dans laquelle il est prévu au niveau du pied (4) et de la colonne (2) et/ou au niveau de la colonne (2) et de la tête de perçage (3) un point de séparation raccordable du toron d'alimentation électrique (5), **caractérisé en ce que** le point de séparation a la forme d'une connexion électrique détachable (6).

2. Perceuse à colonne selon la revendication 1, **caractérisée en ce que** le toron d'alimentation électrique (5) passe du pied (4) jusqu'à la tête de perçage (3) à l'intérieur de la perceuse à colonne (1).

3. Perceuse à colonne selon la revendication 1 ou 2, **caractérisée en ce que** la connexion électrique (6) est prévue au moins partiellement à l'intérieur de la colonne (2).

4. Perceuse à colonne selon l'une des revendications précédentes, **caractérisée en ce que** la connexion électrique (6) présente au moins un connecteur (13, 47) qui est bloqué par un dispositif anti-traction vis-à-vis de la colonne (2) et/ou du pied (4) et/ou de la tête de perçage (3) contre un mouvement opposé au sens d'ouverture de la connexion électrique (6).

5. Perceuse à colonne selon la revendication 4, **caractérisée en ce que** le dispositif anti-traction d'un premier connecteur (13) vis-à-vis de la colonne (2) est un profil de serrage (18) prévu sur le premier connecteur (13) et/ou la colonne (2).

6. Perceuse à colonne, selon l'une des revendications 4 ou 5, **caractérisée en ce que** le dispositif anti-traction d'un deuxième connecteur (47) vis-à-vis du pied (4) ou de la tête de perçage (3) est une partie de collerette (59) qui maintient le deuxième connecteur (47) à l'opposé du sens d'ouverture de la connexion électrique (6) au niveau du pied (4) ou de la tête de perçage (3).

7. Perceuse à colonne selon l'une des revendications précédentes, **caractérisée en ce que** la connexion électrique (6) présente au moins un connecteur (13, 47) qui a au moins un ergot de positionnement (23, 55) avec lequel il est placé et aligné sur la colonne (2) ou le pied (4) ou la tête de perçage (3).

8. Perceuse à colonne selon l'une des revendications précédentes, **caractérisée en ce que** la connexion électrique (6) présente au moins un connecteur (98) qui a un module de fixation (99) et un module de connexion électrique distinct prévu pour cela (100) qui peut être placé de manière amovible sur le module de fixation.

9. Perceuse à colonne selon l'une des revendications précédentes, **caractérisée en ce qu'**il est prévu au niveau du pied (4) un magasin pour le toron d'alimentation électrique.

10. Perceuse à colonne selon la revendication 9, **caractérisée en ce que** le magasin a reçu une forme de bobineur de câble ou d'enrouleur de câble.

11. Perceuse à colonne selon l'une des revendications précédentes, **caractérisée en ce qu'**il est prévu sur le pied (4) au moins un évidement (42, 108) par lequel le toron d'alimentation électrique (5) est sorti de la zone du pied (4).

12. Perceuse à colonne selon la revendication 11, **caractérisée en ce que** l'évidement (108) présente un élément de retenue (111) insérable dans l'évidement avec au moins un profil de retenue (115) avec lequel le toron d'alimentation électrique (5, 41) peut être fixé à une position prédéterminée par rapport à l'élément de retenue (111).

13. Perceuse à colonne selon l'une des revendications précédentes, **caractérisée en ce qu'**il est prévu une partie de collerette (59) avec laquelle la colonne (2) est logée centrée sur le pied (4).

14. Perceuse à colonne selon la revendication 13, **caractérisée en ce qu'**une connexion électrique (6) est disposée au moins partiellement à l'intérieur de la partie de collerette (59).

15. Perceuse à colonne selon l'une des revendications 13 ou 14, **caractérisée en ce que** la colonne (2) et la partie de collerette (59) présentent au moins chacune un trou de perçage (12, 69) au travers duquel un et le même moyen de fixation (70) passe au moins partiellement.

16. Perceuse à colonne selon l'une des revendications précédentes, **caractérisée en ce que** la tête de perçage (3) peut être tournée par rapport à la colonne (2) et qu'il est prévu un dispositif de limitation de rotation (89, 90, 95).

17. Perceuse à colonne selon la revendication 16, **caractérisée en ce qu'**il est prévu sur la colonne (2) ou sur la tête de perçage (3) une ouverture (89) et qu'il est prévu sur la tête de perçage (3) ou sur la colonne (2) un profil (90) insérable dans l'ouverture (89), dans laquelle le mouvement de rotation est limité par la butée du profil (90) sur les sections d'extrémité (91, 92) de l'ouverture (89).

18. Perceuse à colonne selon la revendication 17, **caractérisée en ce que** l'ouverture (89) a la forme d'une gorge disposée transversalement à la direction longitudinale (11) de la colonne (2).

19. Perceuse à colonne selon l'une des revendications 16 à 18, **caractérisée en ce que**, entre la colonne (2) et la tête de perçage (3), est logée une cale amovible (77) avec laquelle est empêchée une rotation de la tête de perçage (3) par rapport à la colonne (2).

20. Perceuse à colonne selon la revendication 19, **caractérisée en ce que** la cale (77) présente deux éléments de serrage (78, 79), réglables en distance l'un par rapport à l'autre, qui peuvent être mis à une position bloquant la colonne (2), dans laquelle la cale (77) s'appuie radialement contre la tête de perçage (3).

21. Perceuse à colonne selon la revendication 20, **caractérisée en ce que** la cale (77) présente un mécanisme de vissage (82, 84) qui permet de régler l'écart entre les éléments de serrage (78, 79).

22. Perceuse à colonne selon l'une des revendications 20 ou 21, **caractérisée en ce que**, au moins un des éléments de serrage (78, 79) présente une surface d'appui (87, 88) correspondant à la forme de la colonne (2).

23. Perceuse à colonne selon l'une des revendications 19 à 22, **caractérisée en ce que** la cale (77) est logée dans une cavité creuse (74) de la tête de perçage (3), laquelle cavité est coupée par une tubulure (72) dans laquelle la colonne (2) est partiellement logée.
